# EUROPEAN PATENT APPLICATION

(11) **EP 3 327 448 A1**
(43) Date of publication of application: **30.05.2018**
(21) Application number: 16201131.6
(22) Date of filing: 29.11.2016
(51) Int. Cl.: G01Q 70/02, G01B 13/00

(54) **SCANNING PROBE MICROSCOPY SYSTEM, AND METHOD FOR PROBE EXCHANGE THEREIN**

(71) Applicant: Nederlandse Organisatie voor toegepast- natuurwetenschappelijk onderzoek TNO, 2595 DA 's-Gravenhage (NL)
(72) Inventor: Sadeghian Marnani, Hamed, 2595 DA's-Gravenhage (NL); Binagte, Anthon Adriaan, 2595 DA's-Gravenhage (NL); Dekker, Albert, 2595 DA's-Gravenhage (NL)
(74) Representative: V.O.

(57) **Abstract**

A scanning probe microscopy system (1) comprises a gap width measuring system for measuring, during probe exchange operations, a gap width (D1, D2) of a gap (3) in-between a probe (2) and a probe holder (21). The gap width measuring system comprises: a gas flow system (4, 5, 6, 7, 8) for controlling a gas flow of a gas by applying predetermined gas flow excitation conditions to said gas, wherein said gas flow occurs at least in said gap (3); a pressure sensor (9) for sensing a time-dependently variable pressure of said gas; and an evaluation system (10) for determining said gap width based on at least said sensed pressure and said predetermined gas flow excitation conditions. The invention allows for accurate measurement of the gap width, without substantially sacrificing building space of the SPM system nearby the location where the probe and the probe holder meet.

## Description

The invention relates to scanning probe microscopy (SPM), which is a branch of microscopy that forms images of surfaces using a physical probe that scans samples. Many various established types of scanning probe microscopy exist, of which atomic force microscopy (AFM) is one of the most commonly used techniques.

In SPM systems, such as e.g. AFM systems, it is required to frequently exchange a probe, which is mounted to a scanning head of an SPM system, by another probe. For that purpose various automated probe exchange methods are used, which can automatically mount probes to scanning heads, as well as automatically demount probes therefrom.

When performing probe exchange operations, a probe is automatically controlled to move towards a probe holder of a scanning head of the SPM system for mounting the probe to the probe holder, or away from said probe holder for demounting the probe from the probe holder. It is important that these movements of the probe relative to the probe holder are performed very fast and very accurately. To meet these speed and accuracy requirements, it is helpful to accurately measure, during these relative movements of the probe, the time-dependently variable values of a gap width of a gap in-between the probe and the probe holder, especially in the movement ranges where such a gap width is very small, such as less than 1 millimeter, less than 100 micrometer, less than 20 micrometer, and less than 10 micrometer. Based on the accurate measurements of the time-dependently variable values of a gap width during said relative movements of the probe, probe exchange operations can generally be further optimized with respect to speed and accuracy.

However, it is noted that in SPM systems, such as e.g. AFM systems, there generally is hardly building space available for accommodating an accurate gap width measuring system of the above-explained type nearby the location where the probe and the probe holder meet.

It is an object of the invention to provide a solution according to which, during probe exchange operations in an SPM system, time-dependently variable values of a gap width between a probe and a probe holder can be measured accurately without substantially sacrificing building space of the SPM system nearby the location where the probe and the probe holder meet.

For that purpose the invention provides a scanning probe microscopy system according to the attached independent claim 1, as well as a method according to the attached independent claim 3. Preferable embodiments of the invention are provided by the attached dependent claims 2 and 4.

Accordingly, the invention provides a scanning probe microscopy system, having a probe-exchange operation condition in which a probe of the scanning probe microscopy system is automatically controlled to move:
- towards a probe holder of a scanning head of the scanning probe microscopy system for mounting the probe to the probe holder; or
- away from said probe holder for demounting the probe from the probe holder;
   wherein the scanning probe microscopy system comprises a gap width measuring system for measuring, in said probe-exchange operation condition, at least one value of a time-dependently variable gap width of a gap in-between said probe and said probe holder,
   and wherein the gap width measuring system comprises:
   - a gas flow system, which is configured, arranged and effective to control in said probe-exchange operation condition a gas flow of a gas by applying predetermined gas flow excitation conditions to said gas, wherein said gas flow occurs at least in said gap;
   - at least one pressure sensor, which is configured, arranged and effective to sense in said probe-exchange operation condition a time-dependently variable pressure of said gas, wherein said sensing takes place at at least one predetermined position in a pressure sensing flow path of said gas flow; and
   - an evaluation system, which is configured, arranged and effective to determine in said probe-exchange operation condition said at least one value of said time-dependently variable gap width based on at least said sensed time-dependently variable pressure of said gas and said predetermined gas flow excitation conditions in said probe-exchange operation condition.

Hence, the invention requires hardly any building space of the SPM system nearby the location where the probe and the probe holder meet. After all, nearby the location where the probe and the probe holder meet, the invention merely requires that a gas may access to and flow in the gap in-between the probe and the probe holder. In other words, the building space requirement is more or less automatically met because, nearby the location where the probe and the probe holder meet, the invention basically only requires the gap, which is inherently available there.

The underlying working principle of the gap width measuring system of the SPM system according to the invention is elucidated as follows. When a gas is flowing under predetermined gas flow excitation conditions through a gap, changing the gap width results in changing the flow resistance provided by the gap. For example, when the gap is narrowing, the gas flow speed is consequently increasing while at the same time the gas pressure is decreasing. In fact, said predetermined gas flow excitation conditions in said probe-exchange operation condition determine a functional relationship between said gas pressure and said gap width as function variables, when said gas pressure is measured at at least one predetermined position in a pressure sensing flow path of said gas flow. In other words, said functional relationship between said gas pressure and said gap width is derivable from said predetermined gas flow excitation conditions. In that sense, said functional relationship can be said to be a-priori known for a given SPM system configuration. Accordingly, based on said a-priori known functional relationship between gas pressure and gap width, the time-dependently variable values of the gap width can directly be derived from the sensed time-dependently variable pressure values of the gas.

In a preferable embodiment of a scanning probe microscopy system according to the invention, the scanning probe microscopy system further comprises a vacuum suction system for holding, in a mounted-probe operation condition of the scanning probe microscopy system, the probe against the probe holder based on vacuum suction applied through a vacuum suction flow path, wherein said pressure sensing flow path of the gap width measuring system and said vacuum suction flow path of the vacuum suction system are at least partially overlapping with one another.

Thanks to the vacuum suction system, the probe holder functions as a vacuum clamp. The integrated combination of said gap width measuring system with the vacuum suction system, makes the automatic probe exchange structure of the SPM system according to the invention extremely efficient in terms of speed, accuracy and building space.

In the following, the invention is further elucidated with reference to a non-limiting embodiment of the invention and with reference to the schematic figures in the attached drawing, in which the following is shown.
Fig. 1 shows in a cross-sectional side view an example of an embodiment of an SPM system according to the invention, wherein the SPM system is in its probe-exchange operation condition.
Fig. 2 shows a functional relationship between sensed gas pressure and gap width, to illustrate the underlying working principle of the gap width measuring system of the SPM system of Fig. 1.

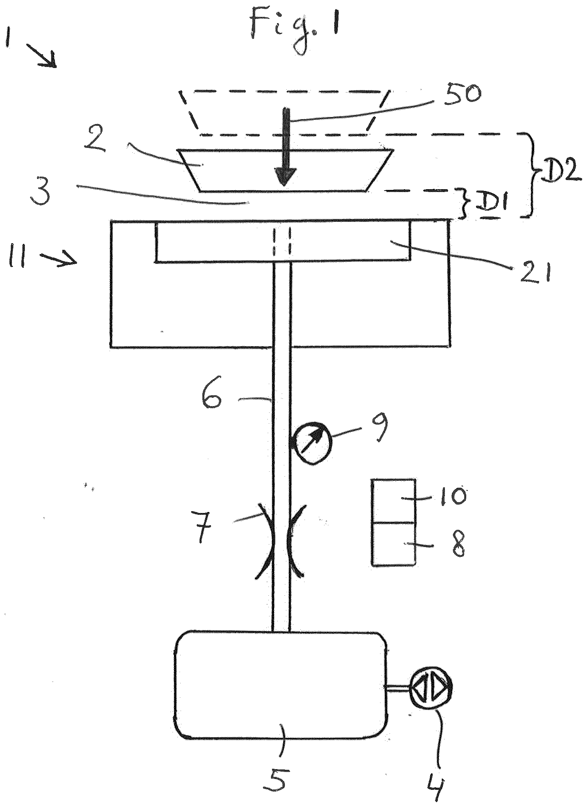

The reference signs used in Figs. 1-2 are referring to the abovementioned parts and aspects of the invention, as well as to related parts and aspects, in the following manner.
- 1: scanning probe microscopy system (SPM system)
- 2: probe
- 3: gap in-between the probe and the probe holder
- 4: pump
- 5: gas vessel
- 6: gas conduit
- 7: gas flow restrictor
- 8: gas flow controller
- 9: pressure sensor
- 10: evaluation system
- 11: scanning head
- 21: probe holder
- 50: movement of the probe relative to the probe holder
- 51: course along a graph of a functional relationship
- D, D1, D2: gap width of the gap
- P, P1, P2: pressure of gas

Reference is first made to Fig. 1. In the shown example of Fig. 1, the gas flow system of the SPM system 1 according to the invention comprises the pump 4, the gas vessel 5, the gas conduit 6, the gas flow restrictor 7, and the gas flow controller 8. During the probe-exchange operation condition of the SPM system 1, the gas flow controller 8 may, for example, control the pump 4 to continuously pump a gas (e.g. air, or another gas) out of the gas vessel 5, thereby maintaining in the gas vessel 5 a certain continuous underpressure of the gas relative to the environment. This results into a continuous gas flow, which is successively flowing through the gap 3, via the probe holder 21 into the gas conduit 6, into the gas vessel 5, and via the pump 4 out of the gas vessel 5. It is noted that during the probe-exchange operation condition the gas flow controller 8 may furthermore control the gas flow restrictor 7. Accordingly, it is clear how the gas flow system of the SPM system 1, by applying predetermined gas flow excitation conditions to the gas, is able to control the gas flow in the probe-exchange operation condition, wherein that gas flow occurs at least in the gap 3. It is noted that the pressure sensor 9 is arranged to sense the pressure of the gas at some point along the gas conduit 6, hence at some point along the abovementioned pressure sensing flow path, which in the shown example is successively formed by the gap 3, the probe holder 21, the gas conduit 6, the gas vessel 5, and the pump 4.

In the situation of Fig. 1, the probe 2 is automatically controlled to move towards the probe holder 21. This relative movement of the probe 2 has been indicated in Fig. 1 by the arrow 50. In Fig. 1 a previous position of the probe 2 during its relative movement 50 has been shown in broken lines, while the actual position of the probe 2 has been shown in full lines. In Fig. 1 it is seen that in the actual position of the probe 2 the gap width D of the gap 3 has the value D1, while in said previous position of the probe 2 the gap width D has the value D2.

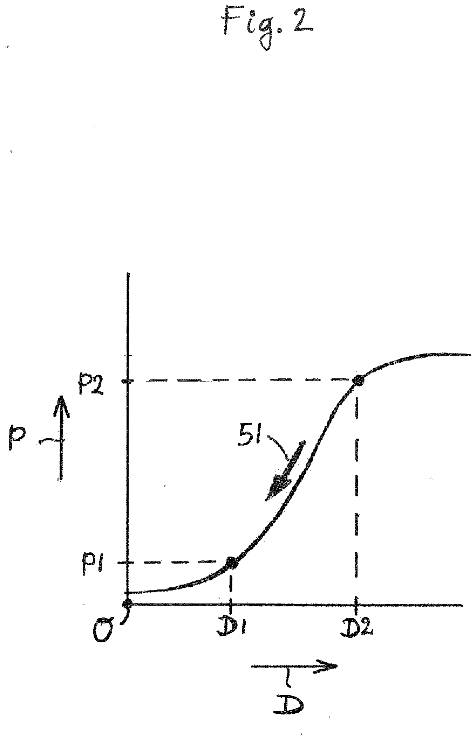

Now, additional reference is made to Fig. 2, which shows, in relation to the example of Fig. 1, a graph of the functional relationship between the sensed gas pressure P and the gap width D as function variables. Therein, the sensed gas pressure P refers to the pressure sensed by the pressure sensor 9. It is noted that in Fig. 2 the letter 0 refers to the origin of the (D, P) axes system, which means that at this origin 0 both the gap width D and the sensed gas pressure P are zero.

The functional relationship of Fig. 2 is predetermined by the predetermined gas flow excitation conditions imposed by the gas flow controller 8. That is, the functional relationship of Fig. 2 is predetermined by how exactly the gas flow controller 8 controls the pump 4 and the gas flow restrictor 7. In that sense, said functional relationship can be said to be a-priori known for certain given gas flow excitation conditions imposed by the gas flow controller 8 for the given configuration of the SPM system 1. Apriori known characteristics of said a-priori known functional relationship can for example be acquired by performing calibrating operations in advance for said certain given gas flow excitation conditions for said given configuration of SPM system 1.

Accordingly, based on a-priori known characteristics of said functional relationship between gas pressure P and gap width D as shown in Fig. 2, the time-dependently variable values of the gap width can, during a probe-exchange operation condition of the SPM system 1, directly and immediately be derived from the sensed time-dependently variable pressure values of the gas. In the example of Fig. 2 it is seen that the specific gap width values D1 and D2 are derived from the pressure values P1 and P2, respectively, sensed by the sensor 9. The arrow 51 in Fig. 2 shows the course along the graph of Fig. 2, which course corresponds to the movement of the probe 2 according to the arrow 50 in Fig. 1.

The SPM system 1 furthermore is an example of the abovementioned preferable embodiment of a scanning probe microscopy system according to the invention, wherein the scanning probe microscopy system further comprises a vacuum suction system for holding, in a mounted-probe operation condition of the scanning probe microscopy system, the probe against the probe holder based on vacuum suction applied through a vacuum suction flow path, wherein said pressure sensing flow path of the gap width measuring system and said vacuum suction flow path of the vacuum suction system are at least partially overlapping with one another.

That is, in the SPM system 1, the probe holder 21 functions as a vacuum clamp for holding the probe 2 against the probe holder 21 based on vacuum suction applied through said vacuum suction flow path. In fact, in the shown example, both the vacuum suction system and the gas flow system comprise the same elements, i.e. the pump 4, the gas vessel 5, the gas conduit 6, the gas flow restrictor 7, and the gas flow controller 8. Furthermore, the pressure sensing flow path of the gap width measuring system and the vacuum suction flow path of the vacuum suction system have the probe holder 21, the gas conduit 6, the gas vessel 5, and the pump 4 as mutually overlapping parts.

The integrated combination of the gap width measuring system and the vacuum system, makes the SPM system 1 extremely efficient in terms of speed, accuracy and building space. For example, when in the probe-exchange operation condition of Fig. 1, during the movements 50 of the probe 2 relative to the probe holder 21 a lower threshold value of the gap width D has been measured by the gap width measuring system, the gas flow controller 8 can then immediately switch to a different control mode, which is suitable for holding, in the mounted-probe operation condition of the scanning probe microscopy system, the probe 2 against the probe holder 21 based on vacuum suction applied through the vacuum suction flow path.

## Claims

1. A scanning probe microscopy system (1), having a probe-exchange operation condition in which a probe (2) of the scanning probe microscopy system is automatically controlled to move (50):
- towards a probe holder (21) of a scanning head (11) of the scanning probe microscopy system for mounting the probe to the probe holder; or
- away from said probe holder for demounting the probe from the probe holder;
wherein the scanning probe microscopy system comprises a gap width measuring system (4, 5, 6, 7, 8, 9, 10) for measuring, in said probe-exchange operation condition, at least one value of a time-dependently variable gap width (D, D1, D2) of a gap (3) in-between said probe and said probe holder,
and wherein the gap width measuring system comprises:
- a gas flow system (4, 5, 6, 7, 8), which is configured, arranged and effective to control in said probe-exchange operation condition a gas flow of a gas by applying predetermined gas flow excitation conditions to said gas, wherein said gas flow occurs at least in said gap (3);
- at least one pressure sensor (9), which is configured, arranged and effective to sense in said probe-exchange operation condition a time-dependently variable pressure (P) of said gas, wherein said sensing takes place at at least one predetermined position in a pressure sensing flow path of said gas flow; and
- an evaluation system (10), which is configured, arranged and effective to determine in said probe-exchange operation condition said at least one value of said time-dependently variable gap width (D, D1, D2) based on at least said sensed time-dependently variable pressure (P, P1, P2) of said gas and said predetermined gas flow excitation conditions in said probe-exchange operation condition.

2. A scanning probe microscopy system (1) according to claim 1, further comprising a vacuum suction system (4, 5, 6, 7, 8) for holding, in a mounted-probe operation condition of the scanning probe microscopy system, the probe (2) against the probe holder (21) based on vacuum suction applied through a vacuum suction flow path, wherein said pressure sensing flow path of the gap width measuring system (4, 5, 6, 7, 8, 9, 10) and said vacuum suction flow path of the vacuum suction system (4, 5, 6, 7, 8) are at least partially overlapping with one another.

3. A method for probe exchange in a scanning probe microscopy system (1), wherein the scanning probe microscopy system has a probe-exchange operation condition in which a probe (2) of the scanning probe microscopy system is automatically controlled to move (50):
- towards a probe holder (21) of a scanning head (11) of the scanning probe microscopy system for mounting the probe to the probe holder; or
- away from said probe holder for demounting the probe from the probe holder;
and wherein in said probe-exchange operation condition at least one value of a time-dependently variable gap width (D, D1, D2) of a gap (3) in-between said probe and said probe holder is measured by performing the following steps in said probe-exchange operation condition:
- controlling a gas flow of a gas by applying predetermined gas flow excitation conditions to said gas, wherein said gas flow occurs at least in said gap (3);
- sensing a time-dependently variable pressure (P) of said gas,
wherein said sensing takes place at at least one predetermined position in a pressure sensing flow path of said gas flow; and
- determining said at least one value of said time-dependently variable gap width (D, D1, D2) based on at least said sensed time-dependently variable pressure (P, P1, P2) of said gas and said predetermined gas flow excitation conditions in said probe-exchange operation condition.

4. A method according to claim 3, wherein the scanning probe microscopy system (1) further has a mounted-probe operation condition in which the probe (2) is held against the probe holder (21) based on vacuum suction applied through a vacuum suction flow path, wherein said pressure sensing flow path and said vacuum suction flow path are at least partially overlapping with one another.
